# EUROPÄISCHE PATENTSCHRIFT

(11) **EP 0 576 979 B1**
(45) Veröffentlichungstag und Bekanntmachung des Hinweises auf die Patenterteilung: **21.08.1996**
(21) Anmeldenummer: 93109990.7
(22) Anmeldetag: 23.06.1993
(51) Int. Cl.: B60P 1/04

(54) **Vorrichtung zum Sichern eines kippbaren Teils in einer ersten Stellung und in einer Kippstellung**
Device for securing a tiltable part in a first position and in a tilted position
Dispositif pour immobiliser un élément basculant dans une première position et dans une position basculée

(30) Priorität: 02.07.1992 US 907895
(43) Veröffentlichungstag der Anmeldung: 05.01.1994
(73) Patentinhaber: DEERE & COMPANY, Moline, Illinois 61265 (US)
(72) Erfinder: Friesen, Henry, Niagara Falls, Ontario L2J 2M7 (CA); Hamm, Nicholas, Vineland, Ontario L0R 2C0 (CA)
(74) Vertreter: Feldmann, Bernhard

(56) Entgegenhaltungen:
- DE-B- 1 296 577
- DE-C- 1 176 439
- US-A- 4 026 380

## Beschreibung

Die Erfindung bezieht sich auf eine Vorrichtung zum Sichern eines kippbaren Teils eines Fahrzeuges in einer ersten Stellung, in der er auf einem Rahmenteil des Fahrzeuges aufliegt, und in einer hochgestellten Kippstellung.

Eine derartige Vorrichtung findet bevorzugt an Nutzfahrzeugen Verwendung, wie zum Beispiel an dem JOHN DEERE AMT 600. Dieses Fahrzeug hat ein einziges über eine Lenkstange steuerbares vorderes Laufrad und einen rückwärtigen Tandemantrieb unterhalb einer Ladepritsche, ist für den Transport von Erde, Sand oder Steinen sowie sperrigen Gut bestimmt und zeichnet sich durch einen äußerst geringen Bodendruck aus. Der AMT ist deshalb besonders gut im freien Gelände, das hügelig sein oder einen nassen Untergrund haben kann, auf Golf- oder ähnlichen Anlagen sowie in Gebieten mit Junger Vegetation einsetzbar. Je nach der Art des Ladegutes wird die Ladepritsche von Hand oder mit einer Schaufel beladen. Ein einfaches und schnelles Entladen kann durch Verstellen der Ladepritsche in die Kippstellung erfolgen. In der Kippstellung ist auch ein Zugang zu unterhalb der Ladepritsche gelegenen Aggregaten oder ein leichtes Reinigen der Ladepritsche möglich. In der Kippstellung ist deshalb die Ladepritsche ähnlich wie eine Fahrzeughaube durch eine Stellstange arretierbar. In der Betriebs- oder Transportstellung muß die Ladepritsche ebenfalls festgestellt werden, damit sie beim Überfahren von Unebenheiten oder bei ungünstiger Lastverteilung sich nicht selbsttätig in ihre Kippstellung verstellt. Die Arretierung in der Transportstellung erfolgt über einen Strapsverschluß.

Die der Erfindung zugrunde liegende Aufgabe wird in einem Verriegelungsglied gesehen, mit dem ein kippbarer Teil eines Fahrzeuges in einfacher Weise in seiner Normalstellung und in seiner Kippstellung festgestellt werden kann. Hierzu sieht die Erfindung eine Stange, deren einer Endteil schwenkbar mit dem kippbaren Teil oder dem Rahmenteil verbunden ist und deren anderer Endteil in einer mit einem Arretiersitz versehenen Führung in dem Rahmenteil oder dem kippbaren Teil verschiebbar ist, einen ersten Riegelteil, der mit dem anderen Endteil der Stange verbunden ist, und einen zweiten mit dem ersten Riegelteil verriegelbaren Riegelteil an dem kippbaren Teil oder dem Rahmenteil vor, wobei der erste Riegelteil in Richtung auf den zweiten Riegelteil vorgespannt ist. Auf diese Weise ist durch die einzige Stange eine einfache Verriegelung geschaffen, die sowohl in der ersten Stellung als auch in der Kippstellung zuverlässig wirkt.

Nach der Erfindung kann die Vorspannung in einfacher Weise durch eine entsprechende Ausbildung des Schwenkanschlusses der Stange dadurch erreicht werden, daß der schwenkbar mit dem kippbaren Teil oder dem Rahmenteil verbundene Endteil als ein in einem Winkel gegenüber dem übrigen Teil der Stange abgebogener Schwenkarm ausgebildet ist, der übrige Teil der Stange zumindest in einem bestimmten Bereich elastisch ausgebildet ist und daß der zweite Riegelteil eine Fangfläche aufweist, die derart angeordnet ist, daß bei einem Anliegen des ersten Riegelteils gegen die Fangfläche der übrige Teil der Stange ausgebogen wird. Zu einem Entriegeln braucht dann die Stange nur von der Fangfläche weggezogen zu werden.

Die Führung der Stange kann dadurch erreicht werden, daß der andere Endteil der Stange als ein in die Führung eingreifender Schenkel ausgebildet ist, wobei der Schenkel in Biegerichtung der Stange verläuft und mit einem Anschlag versehen ist, der verhindert, daß der Schenkel aus der Führung austreten kann. Dabei ist die Führung derart gestaltet, daß nur im Bereich der Arretiertasche eine nennenswerte Vertikalbewegung des Schenkels möglich ist.

Bei einer Vorrichtung zum Sichern einer kippbaren Ladepritsche in einer Betriebsstellung, in der sie auf einem Fahrzeugrahmenteil aufliegt, und in einer hochgestellten Kippstellung sieht die Erfindung ferner vor, daß die Stange mit ihrem einen Endteil mit der Ladepritsche vertikal schwenkbar verbunden ist, wobei die Führung in oder an dem Fahrzeugrahmenteil vorgesehen ist. Auf diese Weise kann nach einem Wegdrücken des ersten Riegelteils von dem zweiten die Ladepritsche aus ihrer Transportstellung in die Kippstellung verschwenken. Dabei verstellt sich der Schenkel in der Führung, bis er in die Arretiertasche einfällt und die Ladepritsche in der Kippstellung sichert. Zum Absenken der Pritsche wird der Schenkel durch ein Weiterschwenken der Ladepritsche wieder aus der Arretiertasche gehoben und kann sich in der Führung wieder nach vorne verstellen, bis daß der erste Riegelteil unter Vorspannung infolge der ausgebogenen Stange gegen die Fangfläche des zweiten Riegelteils gedrückt wird. Die Ladepritsche wird dadurch in ihren beiden Stellungen zuverlässig mit einfachsten Mitteln arretiert.

Im einzelnen kann der erste Riegelteil als abgesetzte und mit einem Handgriff versehene Schulter ausgebildet sein, wobei der Schenkel mit vertikalen Abstand unterhalb des ersten Riegelteils vorgesehen ist. Durch Erfassen des Handgriffes kann die Ladepritsche in ihrer Transportstellung leicht entriegelt werden, wobei durch eine manuelle Führung des Handgriffes der Absenkvorgang der Ladepritsche gesteuert werden kann. Andererseits ist es auch durch ein nach hinten Schieben des Handgriffes in der Führung möglich, daß die Ladepritsche in ihre Kippstellung verbracht wird. Die Stange verschwenkt dabei um den Schenkel in der Führung, bis daß der Schenkel in die Arretiertasche eingreift.

Schließlich kann nach der Erfindung noch vorgesehen sein, daß der zweite Riegelteil als eine mit der Ladepritsche verbundene Riegelplatte ausgebildet ist, deren Fangfläche hakenförmig mit einer abgerundeten Unterseite ausgebildet ist. Die abgerundete Unterseite bewirkt damit beim Absenken der Ladepritsche ein automatisches Wegdrücken des ersten Riegelteils, so daß in der Transportstellung ebenfalls ein selbsttätiges Verriegeln erfolgt. Der erste Riegelteil ist vorzugsweise in seinem Querschnitt rund ausgebildet, so daß er von der Hakenausnehmung erfaßt werden kann, sollte die Ladepritsche im Einsatz einmal geringfügige Nickbewegungen ausführen. In der festgestellten Transportstellung liegt der erste Riegelteil in der Regel etwas oberhalb der Hakenausnehmung gegen einen schräg verlaufenden Schenkel der Fangfläche an, damit ein Entriegeln durch einfaches zur Seite Drücken des ersten Riegelteils erfolgen kann.

In der Zeichnung ist ein nachfolgend näher erläutertes Ausführungsbeispiel der Erfindung dargestellt. Es zeigt:
- Fig. 1: ein mit einer Ladepritsche ausgestattetes Nutzfahrzeug in perspektivischer Darstellung,
- Fig. 2: eine Verriegelungsvorrichtung für die Ladepritsche, wobei in ausgezogenen Linien die Arretierung in der Transport- oder Normalstellung und in unterbrochenen Linien die Arretierung in der Kippstellung angedeutet ist,
- Fig. 3: die Verriegelungsvorrichtung in Blickrichtung der Pfeile 3 : 3 in Fig. 2,
- Fig. 4: in perspektivischer Ansicht die Verriegelungsvorrichtung in der Transportstellung,
- Fig. 5: den Schwenkanschluß einer Riegelstützstange im eingebauten und ausgebogenen Zustand und
- Fig. 6: den Schwenkanschluß der Riegelstützstange im nicht eingebauten Zustand.

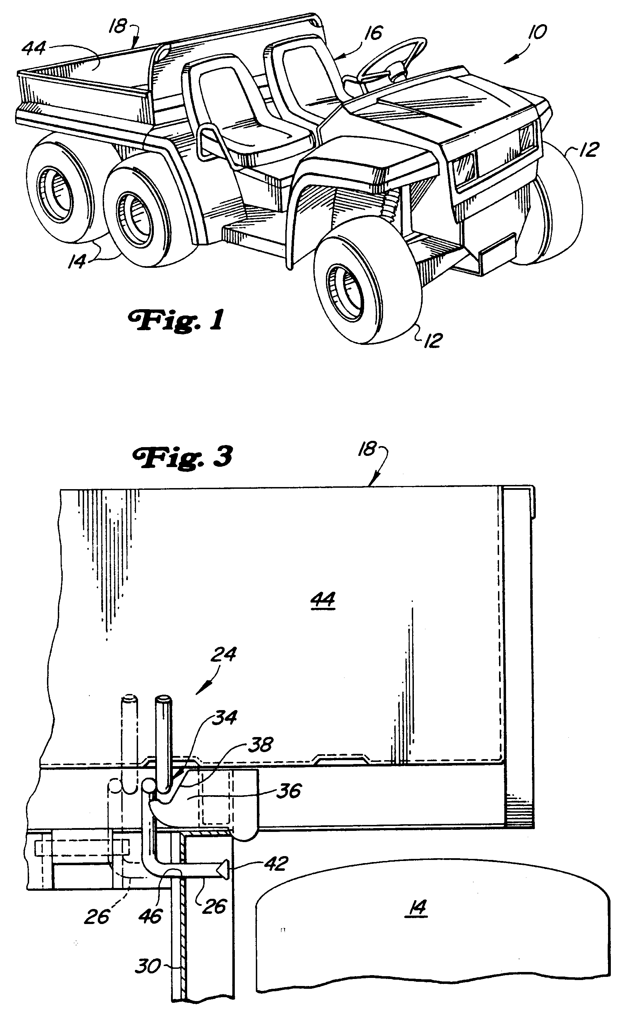

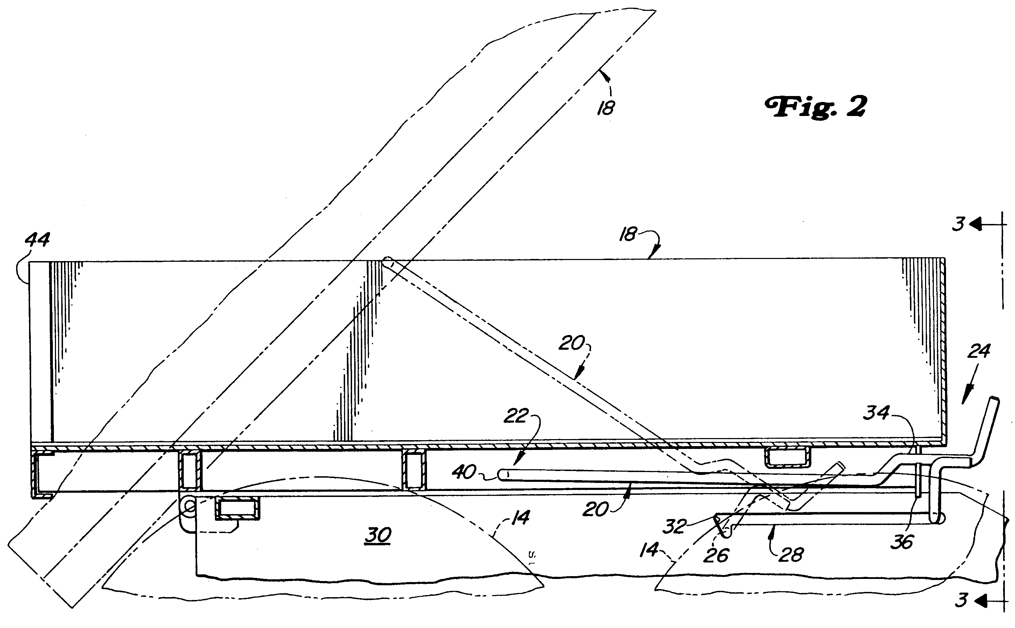

In Fig. 1 der Zeichnung ist ein Nutzfahrzeug 10 dargestellt, dessen Laufräder einen äußerst geringen Bodendruck haben, auf dem Boden auch im beladenen Zustand keine Spurrillen hinterlassen und mit relativ breiten Reifen versehen sind. Derartige Fahrzeuge sind relativ kleiner Bauart und werden bevorzugt auf Golfplätzen, in hügeligen Geländen oder in Gebieten mit durchweichtem Boden oder mit jungen Pflanzen eingesetzt. Hierzu ist das Fahrzeug 10 mit einem oder mit zwei lenkbaren vorderen Laufrädern 12, vier rückwärtigen und antreibbaren Laufrädern 14, zwei nebeneinander liegenden Sitzen 16 und einer Ladepritsche 18 ausgerüstet. Die Ladepritsche 18, die bis zu 300kp aufnehmen kann, nimmt im Einsatz die in Fig. 1 gezeigte Stellung ein und ist zum Abkippen des Ladegutes, zum Reinigen oder für einen Zugang von unter ihr liegenden Aggregaten um eine im Bereich ihres rückwärtigen Endes vorgesehene Schwenkachse in eine in Fig. 2 in gestrichelten Linien angedeutete Kippstellung von etwa 40° hochschwenkbar. In beiden Stellungen kann die Ladepritsche 18 gesichert werden, wozu eine Riegelstützstange 20 dient.

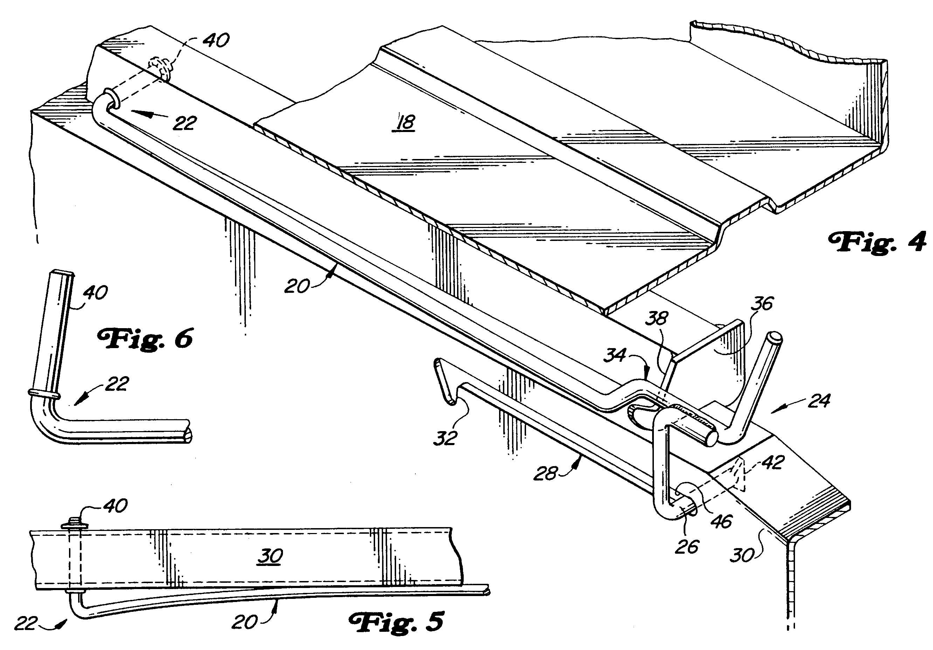

Die Riegelstützstange 20 ist in Fig. 4 in perspektivischer Ansicht und in ihrer Riegelstellung gezeigt. Aus dieser Figur ist erkennbar, daß die Stange 20 mit ihrem rückwärtigen und abgekröpften Endteil 22 schwenkbar in einen mittigen Teil der Ladepritsche 18 eingesetzt ist und sich von dort nach vorne mit ihrem vorderen Endteil 24 bis vor die Ladepritsche 18 erstreckt. Der vordere Endteil 24 ist mit einem horizontal oder etwa horizontal verlaufenden Schenkel 26 versehen, der sich durch ein Langloch oder eine Führung 28, die an einem Rahmen 30 für das Nutzfahrzeug 10 unterhalb der Ladepritsche 18 vorgesehen ist, erstreckt. An seinem rückwärtigen Ende ist das Langloch 28 noch mit einem Sitz 32 oder eine Rasterstelle versehen, in die der Schenkel 26 einfallen kann, wenn die Stange 20 in ihre in Fig. 2 in gestrichelten Linien dargestellte Stellung verstellt wurde, in der sie die Ladepritsche 18 in ihrer Kippstellung arretiert.

Wie aus den Fig. 2 und 4 ebenfalls noch zu ersehen ist, liegt der Schenkel 26 mit vertikalem Abstand unterhalb eines oberen Riegelteils 34 der Stange 20 und ist mit diesem verbunden. Der Schenkel 26 ist zweckmäßig aus einem sich quer zur Fahrtrichtung erstreckenden Rundeisen gebildet, das nach oben abgebogen ist und in einem in Fahrzeuglängsrichtung verlaufenden Teil ausläuft, der mit dem sich ebenfalls in Fahrzeuglängsrichtung erstreckenden Riegelteil 34 verschweißt ist. Der Riegelteil 34 ist mit Bezug auf den restlichen Teil der Stange 20 nach oben abgesetzt, läuft an seinem vorderen Ende in einen nach oben gerichteten Handgriff aus und wirkt mit einem zweiten Riegelteil oder einer Riegelplatte 36 zusammen, die in einem vorderen Bereich der Ladepritsche 18 und von dieser nach unten stehend vorgesehen ist. Die Riegelplatte 36 ist mit einer hakenförmigen Fangfläche 38 versehen, die den Riegelteil 34 in der in Fig. 4 gezeigten Riegelstellung untergreift.

Die Riegelstützstange 20 ist derart ausgebildet, daß sie in der Riegelstellung stets gegen den vertikal gerichteten Schenkel der Riegelplatte 36 gedrückt wird. Sie steht in dieser Stellung dann immer unter einer Spannung, was durch den Schwenkanschluß des rückwärtigen Endteils 22 erreicht wird. Die an sich in Fahrzeuglängsrichtung verlaufende Stange 20 endet an ihrem rückwärtigen Ende in einem im eingebauten Zustand quer zur Fahrzeuglängsrichtung verlaufenden Schwenkarm 40, der im nicht eingebauten Zustand, wie er in Fig. 6 gezeigt ist, mit dem übrigen Stangenteil einen spitzen Winkel bildet. Im eingebauten Zustand nimmt daher dann der in Fahrzeuglängsrichtung verlaufende Teil der Stange 20 die in Fig. 5 wiedergegebene Form an, so daß ihr mittlerer und vorderer Teil in Richtung auf die Ladepritsche 18 vorgespannt ist und der sich an den Schwenkarm 40 anschließende Teil der Stange nach innen gebogen verläuft.

Zum Entriegeln der Stange 20 wird deren vorderes Ende einfach von Hand nach außen gedrückt oder gezogen, damit der Riegelteil 34 von der gleichzeitig hochschwenkenden oder unmittelbar danach hochschwenkenden Riegelplatte 36 freikommt. Damit aber bei diesem Vorgang der Schenkel 26 nicht aus dem Langloch 28 austreten kann, ist an seinem freien Ende noch ein Anschlag 42 vorgesehen.

Bei einem Hochschwenken der Ladepritsche 18 aus ihrer in Fig. 1 gezeigten Position in ihre Kippstellung läuft der Schenkel 26 in dem Langloch 28 nach rückwärts, bis er in den Sitz 32 einfällt. In einem solchen Fall ist die Ladepritsche 18 in ihrer Kippstellung arretiert, da das Gewicht der Ladepritsche den Schenkel 26 der Stange 20 in dem Sitz 32 drückt. Ist die Ladepritsche entleert und noch in ihrer festgestellten Kippstellung, so braucht sie nur von Hand um einen geringen Betrag weiter entgegen dem Uhrzeigerdrehsinn verschwenkt zu werden, wobei der Schenkel wieder aus dem Sitz 32 austritt. Durch entsprechendes Führen der Stange 20 von Hand kann dann die Ladepritsche wieder langsam abgelassen werden. Das Hochschwenken und wieder Ablassen der Ladepritsche kann durch Erfassen von an der Ladepritsche vorgesehenen Griffteilen erfolgen. In einem solchen Fall braucht der Griff an der Stange 20 nur solange festgehalten zu werden, bis daß beim Hochschwenken der Riegelteil 34 die Riegelplatte 36 freigibt, wobei der Schenkel 20 selbsttätig in den Sitz 32 einfällt (wie es in Fig. 2 in gestrichelten Linien angedeutet ist), oder beim Ablassen der Schenkel 26 aus dem Sitz 32 ausgetreten ist, wobei beim Erreichen der Endstellung die Rundung an der Unterseite der Riegelplatten 36 den Riegelteil 34 nach außen drückt, wonach bei einem weiteren Absenken der Riegelteil 36 gegen die Fangfläche 38 der Riegelplatte 38 klappt (wie es aus der Fig. 4 zu ersehen ist). Der Riegelteil kommt dann oberhalb der Hakenausnehmung zur Anlage.

Andererseits kann das Hochschwenken und Absenken der Ladepritsche auch nur durch ein entsprechendes Führen des Griffes an der Stange 20 erfolgen.

Sollte beim Beladen der Ladepritsche 18 das Hauptgewicht der Last an dem rückwärtigen Ende der Ladepritsche im Bereich einer rückwärtigen Klappe 44 sich befinden, so besteht die Tendenz, daß die Ladepritsche 18 aus ihrer Transportstellung in ihre Kippstellung verschwenken will. Dies wird aber durch die Riegelstützstange 20 verhindert, da bei einer solchen Tendenz die Hakenausnehmung an der Fangfläche 38 der Riegelplatte 36 gegen die Unterseite des Riegelteils 34 schwenkt, wodurch der Schenkel 26 gegen die Oberseite 46 des Langloches 28 gezogen und die Ladepritsche in ihrer arretierten Stellung gehalten wird.

Vorzugsweise ist die Riegelstützstange 20 nur an einer Seite der Ladepritsche 18 vorgesehen. Entsprechende Riegelstützstangen können aber auch an beiden Ladepritschenseiten vorgesehen werden.

Die vorbeschriebene Verriegelung ist nicht auf den Einsatz an Ladepritschen begrenzt. Sie läßt sich vorteilhaft immer dann einsetzen, wenn ein kippbarer Teil in seinen verschiedenen Endstellungen festgesetzt werden soll, wie es zum Beispiel bei Motorhauben der Fall ist.

## Patentansprüche

1. Vorrichtung zum Sichern eines kippbaren Teils eines Fahrzeuges (10) in einer ersten Stellung, in der er auf einem Rahmenteil des Fahrzeuges (10) aufliegt, und in einer hochgestellten Kippstellung, gekennzeichnet durch eine Stange (20), deren einer Endteil (22) schwenkbar mit dem kippbaren Teil oder dem Rahmenteil verbunden ist und deren anderer Endteil (24) in einer mit einem Arretiersitz (32) versehenen Führung (28) in dem Rahmenteil oder dem kippbaren Teil verschiebbar ist, einen ersten Riegelteil (34), der mit dem anderen Endteil (24) der Stange (20) verbunden ist, und durch einen zweiten mit dem ersten Riegelteil (34) verriegelbaren Riegelteil (36) an dem kippbaren Teil oder dem Rahmenteil, wobei der erste Riegelteil (34) in Richtung auf den zweiten Riegelteil (36) vorgespannt ist.

2. Vorrichtung nach Anspruch 1, dadurch gekennzeichnet, daß der schwenkbar mit dem kippbaren Teil oder dem Rahmenteil verbundene Endteil (22) als ein in einem Winkel gegenüber dem übrigen Teil der Stange (20) abgebogener Schwenkarm (40) ausgebildet ist, der übrige Teil der Stange (20) zumindest in einem bestimmten Bereich elastisch ausgebildet ist und daß der zweite Riegelteil (36) eine Fangfläche (38) aufweist, die derart angeordnet ist, daß bei einem Anliegen des ersten Riegelteils (34) gegen die Fangfläche (38) der übrige Teil der Stange (20) ausgebogen wird.

3. Vorrichtung nach Anspruch 1, dadurch gekennzeichnet, daß der andere Endteil (24) der Stange (20) als ein in die Führung (28) eingreifender Schenkel (26) ausgebildet ist.

4. Vorrichtung nach Anspruch 2 und 3, dadurch gekennzeichnet, daß der Schenkel (26) in Biegerichtung der Stange (20) verläuft und mit einem Anschlag (42) versehen ist.

5. Vorrichtung nach einem oder mehreren der vorherigen Ansprüche zum Sichern einer kippbaren Ladepritsche (18) in einer Betriebsstellung, in der sie auf einem Fahrzeugrahmenteil (30) aufliegt, und in einer hochgestellten Kippstellung, dadurch gekennzeichnet, daß die Stange (20) mit ihrem einen Endteil (22) mit der Ladepritsche (18) vertikal schwenkbar verbunden ist, wobei die Führung (28) in oder an dem Fahrzeugrahmenteil (30) vorgesehen ist.

6. Vorrichtung nach einem oder mehreren der vorherigen Ansprüche, dadurch gekennzeichnet, das der erste Riegelteil (34) als abgesetzte und mit einem Handgriff versehene Schulter ausgebildet ist, wobei der Schenkel (26) mit vertikalem Abstand unterhalb des ersten Riegelteils (34) vorgesehen ist.

7. Vorrichtung nach einem oder mehreren der vorherigen Ansprüche, dadurch gekennzeichnet, daß der zweite Riegelteil (36) als eine mit der Ladepritsche (18) verbundene Riegelplatte ausgebildet ist, deren Fangfläche (38) hakenförmig mit einer abgerundeten Unterseite ausgebildet ist.

## Claims

1. A device for securing a tiltable part of a vehicle (10) in a first position, in which it rests on a frame part of the vehicle (10), and in a raised, tilted position, characterized by a rod (20), of which one end part (22) is pivotally connected to the tiltable part or the frame part, and of which the other end part (24) can slide in a guideway (28) which is provided in the frame part or the tiltable part and is provided with an arresting seat (32), a first latch part (34) which is connected to the other end part (24) of the rod (20), and by a second latch part (36) on the tiltable part or the frame part and which can interlock with the first latch part (34), wherein the first latch part (34) is biased in the direction of the second latch part (36).

2. A device according to claim 1, characterized in that the end part (22) pivotally connected to the tiltable part or the frame part is in the form of a pivot arm (40) bent relative to the remaining part of the rod (20), the remaining part of the rod (20) being formed elastically at least over a certain region, and in that the second latch part (36) has a catch surface (38), which is so arranged that when the first latch part (34) bears against the catch surface (38), the remaining part of the rod (20) is bent out.

3. A device according to claim 1, characterized in that the other end part (24) of the rod (20) is in the form of a shank (26) engaging in the guideway (28).

4. A device according to claim 2 and 3, characterized in that the shank (26) extends in the bending direction of the rod (20) and is provided with a stop (42).

5. A device according to one or more of the preceding claims, for securing a tiltable loading platform (18) in an operating position, in which it bears on a vehicle frame part (30), and a tilted up position, characterized in that the one end part (22) of the rod (20) is vertically pivotally connected to the loading platform (18), wherein the guideway (28) is provided in or on the vehicle frame part (30).

6. A device according to one or more of the preceding claims, characterized in that the first latch part (34) is in the form of shoulder which is offset and provided with a handle, wherein the shank (26) is provided spaced vertically below the first latch part (34).

7. A device according to one or more of the preceding claims, characterized in that the second latch part (36) is in the form of a latch plate attached to the loading platform (18) with its catch surface (38) of hooked form with a rounded underside.

## Revendications

1. Dispositif pour bloquer une partie basculante d'un véhicule (10) dans une première position, dans laquelle elle est en appui sur un élément de châssis du véhicule (10), et dans une position basculée relevée, caractérisé par une barre (20), dont une partie d'extrémité (22) est reliée de manière à pouvoir pivoter à la partie basculante ou à l'élément de châssis et dont l'autre partie d'extrémité (24) peut être déplacée dans un guide (28), pourvu d'un siège d'arrêt (32) et situé dans l'élément de châssis ou dans la partie basculante, un premier élément de verrouillage (34), qui est relié à l'autre partie d'extrémité (24) de la barre (30), et un second élément de verrouillage (36), qui peut être verrouillé avec le premier élément de verrouillage (34) et situé sur la partie basculante ou sur l'élément de châssis, le premier élément de verrouillage (34) étant précontraint en direction du second élément de verrouillage (36).

2. Dispositif selon la revendication 1, caractérisé en ce que la partie d'extrémité (22), qui est reliée de manière à pouvoir basculer à la partie basculante ou à l'élément de châssis, est agencée sous la forme d'un bras pivotant (40), qui est coudé suivant un certain angle par rapport à l'autre partie de la barre (20), que l'autre partie de la barre (20) est agencée au moins de manière à être élastique dans une zone déterminée et que le second élément de verrouillage (36) possède une surface de réception (38) qui est disposée de telle sorte que, lors d'une application du premier élément de verrouillage (34) contre la surface de réception (38), l'autre partie de la barre (20) fléchit.

3. Dispositif selon la revendication 1, caractérisé en ce que l'autre partie d'extrémité (24) de la barre (20) est agencée sous la forme d'une branche (26) qui s'engage dans le guide (28).

4. Dispositif selon les revendications 2 et 3, caractérisé en ce que la branche (26) s'étend dans la direction de flexion de la barre (20) et comporte une butée (42).

5. Dispositif selon une ou plusieurs des revendications précédentes pour bloquer une plate-forme de chargement basculante (18) dans une position de fonctionnement, dans laquelle elle est en appui sur un élément de châssis (30) du véhicule et, dans une position de basculement relevée, caractérisé en ce que la barre (20) est reliée par l'une (22) de ses parties d'extrémité à la plate-forme de chargement (18) de manière à pouvoir basculer verticalement, le guide (28) étant prévu dans ou sur l'élément de châssis (30) du véhicule.

6. Dispositif selon une ou plusieurs des revendications précédentes, caractérisé en ce que le premier élément de verrouillage (34) est agencé sous la forme d'un épaulement étagé pourvu d'une poignée, la branche (26) étant prévue à une certaine distance verticale au-dessous du premier élément de verrouillage (34).

7. Dispositif selon une ou plusieurs des revendications précédentes, caractérisé en ce que le second élément de verrouillage (36) est agencé sous la forme d'une plaque de verrouillage reliée à la plate-forme de chargement (18) et dont la surface de réception (38) est agencée en forme de crochet possédant un côté inférieur arrondi.
